(19) Europäisches Patentamt
European Patent Office
Office européen des brevets

(11)  EP 2 945 252 B1

(12)  **EUROPEAN PATENT SPECIFICATION**

(45) Date of publication and mention
of the grant of the patent:
**31.01.2018  Bulletin 2018/05**

(51) Int Cl.:
*H02J 3/36* (2006.01)          *H02J 3/16* (2006.01)
*H02J 3/18* (2006.01)          *H02M 1/42* (2007.01)
*H02M 5/44* (2006.01)          *H02M 7/757* (2006.01)

(21) Application number: **15165602.2**

(22) Date of filing: **29.04.2015**

(54) **HIGH VOLTAGE DIRECT CURRENT TRANSMISSION SYSTEM WITH REACTIVE POWER COMPENSATION ON THE AC SIDE**

HOCHSPANNUNGS-GLEICHSTROM-ÜBERTRAGUNGSSYSTEM MIT BLINDLEISTUNGSKOMPENSATION AUF DER WECHSELSTROMSEITE

SYSTÈME DE TRANSMISSION DE COURANT CONTINU HAUTE TENSION AVEC COMPENSATION DE LA PUISSANCE RÉACTIVE SUR LE CÔTÉ EN COURANT ALTERNATIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.05.2014  KR 20140057390**

(43) Date of publication of application:
**18.11.2015  Bulletin 2015/47**

(73) Proprietor: **LSIS Co., Ltd.**
**Anyang-si, Gyeonggi-do 431-848 (KR)**

(72) Inventors:
• **Son, Gum Tae**
**431-848 Anyang-si, Gyeonggi-do (KR)**
• **Park, Ho Hwan**
**431-848 Anyang-si, Gyeonggi-do (KR)**

(74) Representative: **Lang, Johannes**
**Bardehle Pagenberg Partnerschaft mbB**
**Patentanwälte, Rechtsanwälte**
**Prinzregentenplatz 7**
**81675 München (DE)**

(56) References cited:
**EP-A1- 0 554 804      US-A1- 2008 157 728**

**Description**

**BACKGROUND**

The present disclosure relates to a high voltage direct current transmission system, and more particularly to, high voltage direct current transmission system capable of controlling reactive power.

A high voltage direct current (HVDC) transmission refers to an electric power transmission method in which alternating current (AC) power generated from a power plant is converted into direct current (DC) power and transmitted by a power transmission part, and the transmitted DC power is converted again into AC power in a power receiving part to supply the power.

The HVDC system is applied to submarine cable transmission, long distance bulk transmission, interconnection between AC systems, and the like. Also, the HVDC system enables possible interconnection between frequency systems having different frequencies and asynchronous interconnection.

The power transmission part converts AC power into DC power. That is, since the situation in which AC power is transmitted by using submarine cables and the like is very dangerous, the power transmission part converts the AC power into the DC power and then transmits the DC power to a power receiving part.

In general, when the power transmission part is in a DC voltage control mode controlling the DC voltage of a DC power transmission line, the power receiving part may be in an AC power control mode, an AC voltage control mode, and a reactive power control mode. The power transmission part provides active power required by the power receiving part, and has a function to maintain a DC voltage.

However, in the HVDC transmission system, a specific failure, particularly a temporary failure of a power power generating part generating AC power interrupts an accurate transmission of the active power.

Therefore, even if a failure occurs in the HDVC transmission system, a method through which an accurate transmission of the active power is made possible is being demanded.

EP 0 554 804 A1 discloses a control equipment for high voltage direct current transmission system wherein constant reactive power control circuits are used.

**SUMMARY**

This object is achieved by the invention defined in the independent claims; embodiments of the invention are defined in the dependent claims.

Aspects provide a high voltage direct current (HVDC) transmission system and a controlling method thereof, performing a feedback control of reactive power of a HVDC transmission system.

**BRIEF DESCRIPTION OF THE DRAWINGS**

Fig. 1 illustrates a high voltage direct current (HVDC) transmission system.Fig. 2 illustrates a monopolar type HVDC transmission system.Fig. 3 illustrates a bipolar type HVDC transmission system.Fig. 4 illustrates a connection between a transformer and a three-phase valve bridge.

Fig. 5 is a view illustrating the configuration of a HVDC transmission system according to an embodiment.

Figs. 6 to 7 are views illustrating a second control part included in a HVDC transmission system according to another embodiment of the present disclosure.

Fig. 8 is a flow chart illustrating a method of controlling a HVDC transmission system according to an embodiment.

**DETAILED DESCRIPTION OF THE EMBODIMENTS**

Hereinafter, exemplary embodiments will be described in more detail with reference to the accompanying drawings. The suffixes "part", "module" and "unit" used to signify components are used interchangeably herein to aid in the writing of specification, and thus they should not be considered as having specific meanings or roles.

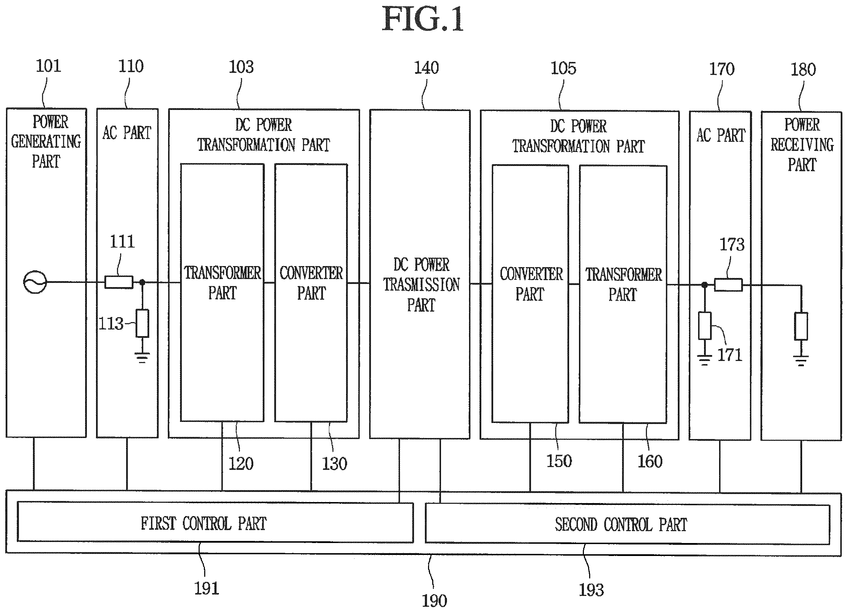

Fig. 1 illustrates a high voltage direct current (HVDC) transmission system according to an embodiment.

As illustrated in Fig. 1, a HVDC system 100 according to an aspect includes a power power generating part 101, a transmission side alternating current (AC) part 110, a transmission side power transformation part 103, a direct current (DC) power transmission part 140, a receiving side power transformation part 105, a receiving side AC part 170, a power receiving part 180, and a control part 190. The transmission side power transformation part 103 includes a transmission side transformer part 120, and a transmission side AC-DC converter part 130. The receiving side power transformation part 105 includes a receiving side DC-AC converter part 150, and a receiving side transformer part 160.

The power power generating part 101 generates three-phase AC power. The power power generating part 101 may include a plurality of power generating plants.

The transmission side AC part 110 transmits the three-phase AC power generated by the power generating part 101 to a DC power transformation substation including the transmission side transformer part 120 and the transmission side AC-DC converter part 130.

The transmission side transformer part 120 isolates the transmission side AC part 110 from the transmission side AC-DC converter part 130 and the DC power transmission part 140.

The transmission side AC-DC converter part 130 converts, to DC power, the three-phase AC power corresponding to the output of the transmission side transformer part 120.

The DC power transmission part 140 transfers the transmission side DC power to the receiving side.

The receiving side DC-AC converter part 150 converts the DC power transferred by the DC power transmission part 140 into AC power.

The receiving side transformer part 160 isolates the receiving side AC part 170 from the receiving side DC-AC converter part 150 and the DC power transmission part 140.

The receiving side AC part 170 provides the power receiving part 180 with three-phase AC power corresponding to the output of the receiving side transformer part 160.

The control part 190 controls at least one of the power power generating part 101, the transmission side AC part 110, the transmission side power transformation part 103, the DC power transmission part 140, the receiving side power transformation part 105, the receiving side AC part 170, the customer part 180, the control part 190, the transmission side AC-DC converter part 130, and the receiving side DC-AC converter part 150. Particularly, the control part 190 may control the turn-on and turn-off timings of a plurality of valves which are provided in the transmission side AC-DC converter part 130 and the receiving side DC-AC converter part 150. Here, the valve may be a thyristor or an insulated gate bipolar transistor (IGBT).

The control part 190 includes a first control unit 191 and a second control unit 193.

The first control unit 191 controls at least one of the power power generating part 101, the transmission side AC part 110, the transmission side power transformation part 103, and the DC power transmission part 140.

The second control unit 193 controls at least one of the receiving side power transformation part 105, the receiving side AC part 170, and the power receiving part 180.

The first control unit 191 and the second control unit 193 may transmit and receive information by using cable communication.

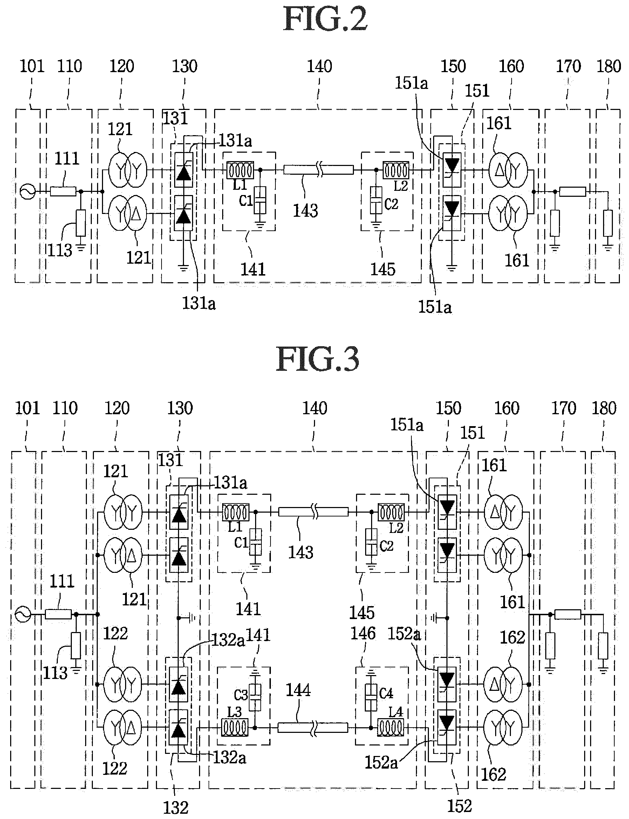

Fig. 2 illustrates a monopolar type HVDC transmission system according to an embodiment.

Particularly, Fig. 2 illustrates a system which transmits DC power with one pole. Hereinafter, the single pole is described assuming a positive pole, but is not necessarily limited thereto.

The transmission side AC part 110 includes an AC transmission line 111 and an AC filter 113.

The AC power transmission line 111 transfers the three-phase AC power generated by the power generating part 101 to the transmission side power transformation part 103.

The transmission side transformer part 120 includes one or more transformers 121 for the positive pole. For the positive pole, the transmission side AC-DC converter part 130 includes an AC-positive pole DC converter 131, and the AC-positive pole DC converter 131 includes one or more three-phase valve bridges 131a respectively corresponding to the one or more transformers 121.

The transmission side positive pole DC filter 141 includes an inductor L1 and a capacitor C1 and performs DC filtering on the positive pole DC power output by the AC-positive pole DC converter 131.

The positive pole DC power transmission line 143 has one DC line for transmission of the positive pole DC power, and the earth may be used as a current feedback path. One or more switches may be disposed on the DC line.

The receiving side positive pole DC filter 145 includes an inductor L2 and a capacitor C2 and performs DC filtering on the positive pole DC power transferred through the positive pole DC power transmission line 143.

The receiving side DC-AC converter part 150 includes a positive pole DC-AC converter 151 and the positive pole DC-AC converter 151 includes one or more three-phase valves 151a.

The receiving side transformer part 160 includes, for the positive pole, one or more transformers 161 respectively corresponding to one or more three-phase valve bridges 151a. When one three-phase valve bridge 151a is used, the positive pole DC-AC converter 151 may generate AC power having six pulses by using the positive pole DC power. Here, a primary coil and a secondary coil of one of the transformers 161 may have a Y-Y connection or a Y-delta ($\Delta$) connection.

Fig. 3 illustrates a bipolar type HVDC transmission system according to an embodiment.

Particularly, Fig. 3 illustrates a system which transmits DC power with two poles. Hereinafter, the two poles are described assuming a positive pole and a negative pole, but are not necessarily limited thereto.

The transmission side AC part 110 includes an AC transmission line 111 and an AC filter 113.

The AC power transmission line 111 transfers the three-phase AC power generated by the power generating part 101 to the transmission side power transformation part 103.

The positive pole DC power transmission line 143 has one DC line for transmission of the positive pole DC power, and

the earth may be used as a current feedback path. One or more switches may be disposed on the DC line.

The negative pole DC power transmission line 144 has one DC line for transmission of the negative pole DC power, and the earth may be used as a current feedback path. One or more switches may be disposed on the DC line.

The receiving side DC-AC converter part 150 includes a positive pole DC-AC converter 151 and a negative pole DC-AC converter 152. The positive pole DC-AC converter 151 includes one or more three-phase valve bridges 151a and the negative pole DC-AC converter 152 includes one or more three-phase valve bridges 152a.

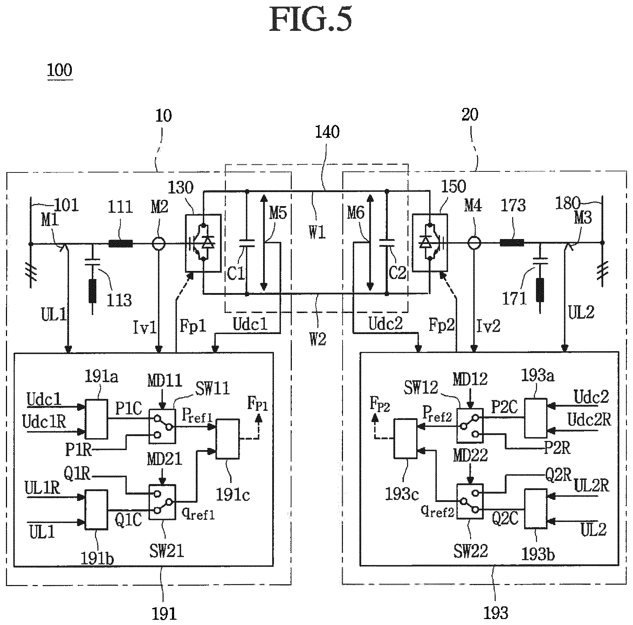

Next, referring to Fig. 5, a configuration of another HVDC transmission system according to an embodiment will be described.

Fig. 5 is a view illustrating the configuration of a HVDC transmission system according to another embodiment of the present disclosure.

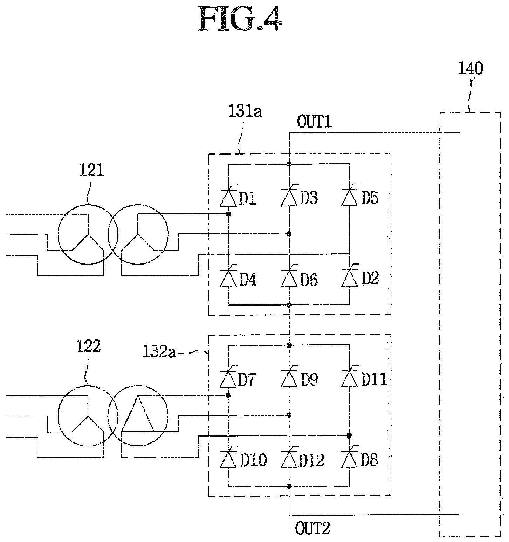

In the embodiment of Fig. 5, some components described in Figs. 1 to 4 are not illustrated.

Referring to Fig. 5, a HVDC transmission system according to another embodiment of the present disclosure includes a power transmission part 10 and a power receiving part 20.

The power transmission part 10 may convert AC power into DC power and provide the converted DC power to the power receiving part 20, and the power receiving part 20 may convert the DC power received from the power transmission part 10 into AC power.

The power transmission part 10 and the power receiving part 20 may be connected by positive pole DC power transmission lines W1 and W2. The DC power transmission lines W1 and W2 may transfer the DC current or DC voltage output from the power transmission part 10 to the power receiving part 20.

The DC power transmission lines W1 and W2 may include either an overhead line or a cable, and a combination thereof. The power transmission part 10 includes a power power generating part 101, a first AC filter 113, an AC transmission line 111, a transmission AC-DC converter part 130, a first capacitor C1, a first measuring part M1, a second measuring part M2, a third measuring part M5, and a first control unit 191.

The power power generating part 101 may generate and transfer AC power to the transmission side AC-DC converter part 130. The power power generating part 101 may be a power plant, such as a wind power plant, capable of producing and providing electric power.

The power power generating part 101 may transfer three-phase AC power to the transmission side AC-DC converter part 130.

In an embodiment, the first AC filter 113 may include a resonance circuit including a capacitor, an inductor, and a resistor.

Also, the first AC filter 113 may provide reactive power consumed in the transmission side AC-DC conversion part 130. The AC power transmission line 111 transfers the three-phase AC power generated by the power generating part 101 to the transmission side AC-DC converter part 130.

The AC power transmission line 111 may be disposed between the first AC filter 113 and the transmission side AC-DC conversion part 130.

The transmission side AC-DC conversion part 130 may convert the AC power transferred from the power power generating part 101. The transmission side AC-DC conversion part 130 may be a semiconductor valve capable of converting AC power into DC power. In an embodiment, the semiconductor valve may be either a thyristor valve or an IGBT valve.

The first measuring part M1 may measure the AC voltage UL1 provided from the power generating part 101 and transfer the measured voltage to the first control part 191. The first measuring part M1 may measure the AC voltage UL1 at a point between the power generating part 101 and the first AC filter 113, and transfer the measured voltage to the first control part 191. The AC voltage measured at a point between the power generating part 101 and the first AC filter 113 may be referred to as a bus voltage UL1.

The second measuring part M2 may measure AC current IV1 or AC voltage UV1 input to from the transmission side AC-DC converter 130, and transfer the measured data to the first control part 191. The AC voltage UV1 input to the transmission side AC-DC converter 130 may be referred to as a bridge voltage UV1.

The third measuring part M5 may measure the DC voltage Udc1 applied to both ends of the first capacitor C1 and transfer the measured data to the first control part 191.

The first control part 191 may control the operation of the power transmission part 10 overall.

The control part 190 described in Fig. 1 may include the first control part 191 and the second control part 193. The first control part 191 may be included in the power transmission part 10, and the second control part 193 may be included in the power receiving part 20.

The first control part 191 may control the operation of the transmission side AC-DC converter 130, based on the bus voltage UL1 from the first measuring part M1, the AC current IV1 which is received from the second measuring part M2 and is input to the transmission side AC-DC converter 130, and the DC voltage Udc1 which is received from the third measuring part M5 and is applied to both ends of the first capacitor C1.

If the transmission side AC-DC converter 130 is an IGBT valve type one, the first control part 191 may control the operation of the transmission side AC-DC converter 130 by transferring a turn-on signal or a turn-off signal to the transmission side AC-DC converter 130, based on the bus voltage UL1 received from the first measuring part M1, the AC current IV1 which is received from the second measuring part M2 and is input to the transmission side AC-DC converter 130, and the DC voltage Udc1 which is received from the third measuring part M5 and is applied to both ends of the first capacitor C1. By the turn-on or turn-off signals, the conversion from AC power into DC power may be controlled.

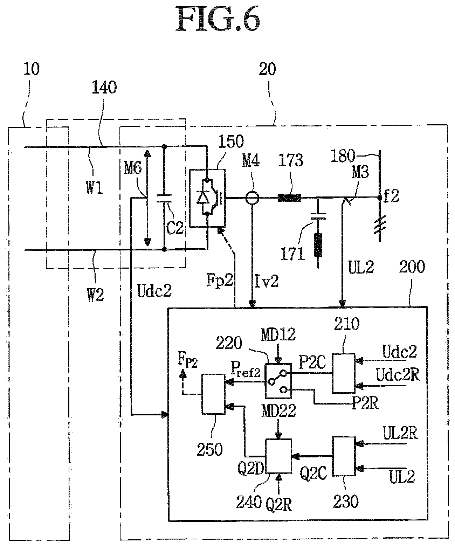

The configuration of the first control part 191 will be described below with reference to Fig. 6.

The power receiving part 20 includes a receiving side DC-AC converter part 150, a second capacitor C2, an AC power transmission line 173, a second AC filter 171, a customer part 180, a fourth measuring part M6, a fifth measuring part M4, a sixth measuring part M3, and a second control part 193.

The receiving side DC-AC converter part 150 may be a semiconductor valve capable of converting the DC power transferred from the transmission side AC-DC converter part 130 into AC power. In an embodiment, the semiconductor valve may be one of a thyristor valve or an IGBT valve.

The receiving side DC-AC converter part 150 may receive DC current or DC voltage through DC power transmission lines W1 and W2 from the transmission side AC-DC converter part 130, and convert the received DC current or DC voltage into AC current or AC voltage.

The second capacitor C2 may be a smoothing capacitor which is connected in parallel to the receiving side DC-AC converter 150 and smoothes the DC voltage input to the receiving side DC-AC converter 150.

The AC power transmission line 173 may provide the AC power received from the receiving side DC-AC converter 150 to the customer part 180.

The AC power transmission line 173 may include an inductor disposed between the receiving side DC-AC converter 150 and the second AC filter 171. The inductor may transfer the AC current output from the receiving side DC-AC converter 150 to the customer part 180. The inductor may be a phase inductor adjusting the phase of AC current.

Also, the second AC filter 171 may provide reactive power consumed in the receiving side DC-AC conversion part 150.

The customer part 180 may receive the AC power from which harmonic components were removed through the second AC filter 171, and consume the received power.

The fourth measuring part M6 may measure the DC voltage Udc2 applied to both ends of the second capacitor C2 and transfer the measured data to the second control part 193.

The fifth measuring part M4 may measure the AC current IV2 and transfer the measured data to the second control part 193.

The sixth measuring part M3 may measure the AC voltage UL2 provided/received to/from the customer part 180 and transfer the measured data to the second control part 193. The sixth measuring part M3 may measure the AC voltage UL2 at a point between the customer part 180 and the second AC filter 171, and transfer the measured voltage to the first control part 193. The AC voltage UL2 measured at a point between the customer part 180 and the second AC filter 171 may be referred to as a bus voltage UL2.

The second control part 193 may control the operation of the power receiving part 20 overall.

The first control part 193 may control the operation of the receiving side DC-AC converter 150 based on the bus voltage UL2 from the sixth measuring part M3, the AC current IV2 which is received from the fifth measuring part M4 and output from the receiving side DC-AC converter 150, and the DC voltage Udc2 which is received from the fourth measuring part M6 and is applied to both ends of the second capacitor C2.

If the receiving side DC-AC converter 150 is an IGBT valve type one, the second control part 193 may control the operation of the receiving side DC-AC converter 150 by transferring a turn-on signal or a turn-off signal to the receiving side DC-AC converter 150, based on the bus voltage UL2 received from the sixth measuring part M3, the AC current IV2 which is received from the fifth measuring part M4 and is output from the receiving side DC-AC converter 150, and the DC voltage Udc2 which is received from the fourth measuring part M6 and is applied to both ends of the second capacitor C2. By the turn-on or turn-off signals, the conversion from DC power into AC power may be controlled.

Hereinafter, the configurations of the first control part 191 and the second control part 193 will be described.

Referring to Fig. 5, the first control part 191 includes a first DC voltage control part 191a, a first switch SW11, a first AC voltage control part 191b, a second switch SW21, and a power control unit 191c.

The first DC voltage control part 191a outputs an active power control signal P1C based on the DC voltage Udc1 measured at the third measuring part M5 and a first reference DC voltage Udc1R. The switch SW11 may select either a first reference active power signal P1R or the active power control signal P1C output from the first DC voltage control part 191a. Specifically, the switch SW11 may select either the first reference active power signal P1R or the active power control signal P1C output from the first DC voltage control part 191a on the basis of a first mode signal MD11.

The first reference active power signal P1R is a reference signal for controlling the active power of the transmission side AC-DC converter part 130, and may include information on the preset value of active power.

The first mode signal MD11 may be a signal generated according to an operation mode of the power transmission part 10.

Each of the power transmission part 10 and the power receiving part 20 may operate in any one mode of a DC voltage control mode, an active power control mode, an AC voltage control mode, and a reactive power control mode. In general, when one of the power transmission part 10 and the power receiving part 20 operates in the DC voltage control mode, the other may operate in any one of the active power control mode, the AC voltage control mode, and the reactive power control mode.

The first mode signal may be a signal generated corresponding to one mode from among the DC voltage control mode, the active power control mode, the AC voltage control mode, and the reactive power control mode.

The first switch SW 11 may output, as an active power control signal pref1, the signal selected between the first reference active power signal P1R and the active power control signal P1C, and transfer the output active power control signal pref1 to the power control unit 191c.

The first AC voltage control part 191b output a reactive power control signal Q1C based on the AC voltage UL1 measured at the first measuring part M1 and a first reference AC voltage UL1R.

The switch SW21 may select either the first reference active power signal Q1R or the reactive power control signal Q1C output from the first AC voltage control part 191b. Specifically, the switch SW21 may select either the first reference active power signal Q1R or the reactive power control signal Q1C output from the first AC voltage control part 191b, based on a second mode signal MD21.

The first reference reactive signal Q1R is a reference signal for controlling the reactive power of the power transmission part 10, and may include information on the preset value of reactive power.

The second mode signal MD21 may be a signal generated according to an operation mode of the power transmission part 10.

The second switch SW 21 may output, as a reactive power control signal qref1, the signal selected between the first reference reactive power signal Q1R and the reactive power control signal Q1C, and transfer the output reactive power control signal qref1 to the power control unit 191c.

The power control unit 191c may calculate the active power corresponding to the active power control signal pref1, and the reactive power corresponding to the reactive power control signal qref1, by using idref and iqref which represent values of reference current with respect to dq-reference frame. For this, the following well-known equation may be used.

$$\texttt{pref=ud*irefd + uq*irefq}$$

$$\texttt{qref=ud*irefq - uq*irefd}$$

Here, AC voltages ud and uq are voltages into which the output voltage from the power generating part 101 is converted with respect to the dq-reference frame according to a well-known method.

The power control unit 191c may transfer the turn-on/off control signal Fp1 to the transmission side DC-AC converter 130 based on the active power control signal pref1 and the reactive power control signal qref1. The turn-on/off timing of the transmission side DC-AC converter 130 may be controlled by the turn-on/off signal Fp1. Accordingly, the active power or reactive power output from the transmission side DC-AC converter 130 may be controlled.

The second control part 193 includes the same components as the first control part 191, and only a difference is that index '1' in reference numeral is replaced with index '2'.

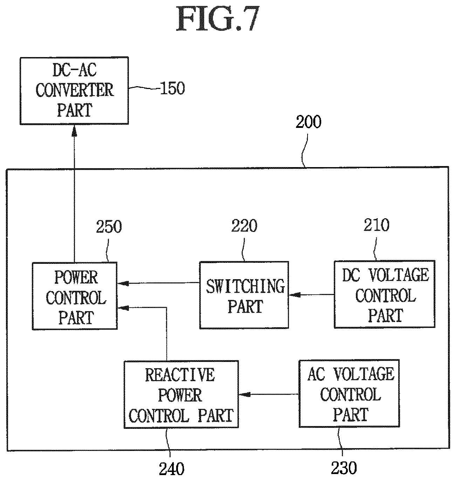

Figs. 6 and 7 are views illustrating a second control part included in a HVDC transmission system according to another embodiment of the present disclosure.

In Figs. 6 and 7, although only the second control part 200 is described for convenience, the configuration and operation of the second control part 200 may also be identically or similarly applied to the first control part included in the power transmission part 10.

The second control part 200 may control the operation of the power receiving part 20 overall.

Particularly, the second control part 200 may perform a feedback control which adjusts active power, reactive power, DC voltage and AC voltage by using measured values.

Referring to Figs. 6 and 7, the second control part 200 includes a DC voltage control part 210, a switching part 220, an AC voltage control part 230, a reactive power control unit 240, and a power control unit 250.

The DC voltage control part 210 outputs an active power control signal P2C, based on a DC voltage Udc2 measured at a fourth measuring part M6 and a reference DC voltage Udc2R.

The switching part 220 may select either a reference active power signal P2R or the active power control signal P2C output from the DC voltage control part 210. Specifically, the switching part 220 may select either the reference active power signal P2R or the active power control signal P2C output from the DC voltage control part 210, based on a mode signal MD12.

The reference active power signal P2R is a reference signal for controlling the active power of the power receiving part 20, and may include information on a preset value of the active power.

The mode signal MD12 may be a signal generated according to an operation mode of the power receiving part 20. Each of the power transmission part 10 and the power receiving part 20 may operate in any one of a DC voltage control mode, an active power control mode, an AC voltage control mode, and a reactive power control mode. In general, when one of the power transmission part 10 and the power receiving part 20 operates in the DC voltage control mode, the other may operate in one of the active power control mode, the AC voltage control mode, and the reactive power control mode.

The mode signal MD12 may be a signal generated corresponding to any one of the DC voltage control mode, the active power control mode, the AC voltage control mode, and the reactive power control mode.

The switching part 220 may output, as an active power control signal pref2, the signal selected between the reference active power signal P2R and the active power control signal P2C, and transfer the output active power control signal pref2 to the power control unit 250.

The AC voltage control part 230 generates a first reactive power control signal Q2C based on the AC voltage UL2 measured at a sixth measuring part M3 and a reference AC voltage UL2R.

The reference AC voltage UL2R may be a preset AC voltage for a stable operation of a HDVC transmission system.

The first reactive power control signal Q2C may be a compensation signal for controlling the reactive power of the power receiving part 20. The first reactive power control signal Q2C may be a signal generated corresponding to the difference between the measured AC voltage UL2 and the reference AC voltage UL2R. The first reactive power control signal Q2C may be a compensation signal for controlling the reactive power of the power receiving part 20 by adjusting the measured AC voltage UL2 into the reference AC voltage UL2R.

The reactive power control unit 240 generates a second reactive power control signal Q2D based on the first reactive power control signal Q2C and a reference reactive power signal Q2R. The reference reactive power signal Q2R may be a signal corresponding to a preset reactive power for a stable operation of the HDVC transmission system.

The second reactive power control signal Q2D may be a signal corresponding to the difference between reactive power corresponding to the reference reactive power signal Q2R and reactive power corresponding to the first reactive power control signal Q2C. The second reactive power control signal Q2D may be a signal for adjusting the reactive power corresponding to the first reactive power control signal Q2C into the reactive power corresponding to the reference reactive power signal Q2R.

The power control unit 250 may adjust active power based on the active power signal received from the switching part 220. The power control unit 250 may adjust the active power of the power receiving part 20 into the active power corresponding to the active power control signal pref2.

The power control unit 250 may generate a turn-on/off signal Fp2 based on the generated active power control signal and transfers the generated signal to the receiving side DC-AC converter part 150. The receiving side DC-AC converter part 150 may receive the turn-on/off signal Fp2 and adjust the active power output from the receiving side DC-AC converter part 150.

The power control unit 250 may control the reactive power of the power receiving part 20 based on the second reactive power control signal Q2D. Specifically, the power control unit 250 may adjust the reactive power of the power receiving part 20 into the reactive power corresponding to the second reactive power control signal Q2D.

The power control unit 250 may generate the turn-on/off signal Fp2 based on the second reactive power control signal Q2D and transfer the generated signal to the receiving side DC-AC converter part 150. The receiving side DC-AC converter part 150 may receive the turn-on/off signal Fp2 and adjust the reactive power output from the receiving side DC-AC converter part 150.

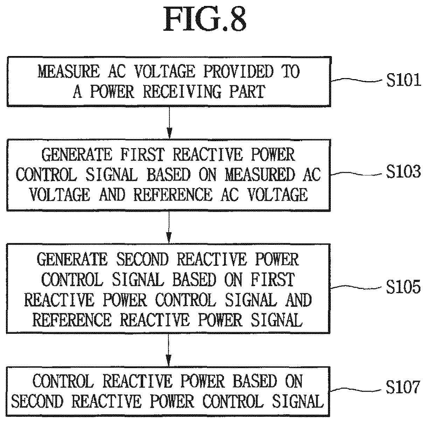

Fig. 8 is a flow chart illustrating a method of controlling a HVDC transmission system according to an embodiment.

A sixth measuring part M3 measures AC voltage provided to a power receiving part 20 (S101). That is, the sixth measuring part M3 may measure AC voltage applied between a second AC filter 171 and a customer part 180.

An AC voltage control part 230 generates a first reactive power control signal Q2C based on the measured AC voltage UL2 and a reference AC voltage UL2R (S103).

The reference AC voltage UL2R may be a preset AC voltage for a stable operation of a HDVC transmission system.

The first reactive power control signal Q2C may be a compensation signal for controlling the reactive power of the power receiving part 20. The first reactive power control signal Q2C may be a signal generated corresponding to the difference between the measured AC voltage UL2 and the reference AC voltage UL2R. The first reactive power control signal Q2C may be a compensation signal for controlling the reactive power of the power receiving part 20 by adjusting the measured AC voltage UL2 into the reference AC voltage UL2R.

The reactive power control unit 240 generates a second reactive power control signal Q2D based on the first reactive power control signal Q2C received from the AC voltage control part 230 and a reference reactive power signal Q2R (S105). The reference reactive power signal Q2R may be a signal corresponding to a preset reactive power for a stable operation of the HDVC transmission system.

The second reactive power control signal Q2D may be a signal corresponding to the difference between reactive power corresponding to the reference reactive power signal Q2R and reactive power corresponding to the first reactive power control signal Q2C. The second reactive power control signal Q2D may be a signal for adjusting the reactive power corresponding to the first reactive power control signal Q2C into the reactive power corresponding to the reference reactive power signal Q2R.

A power control unit 250 may control the reactive power of the power receiving part 20 based on the second reactive power control signal Q2D (S107). Specifically, the power control unit 250 may adjust the reactive power of the power receiving part 20 into the reactive power corresponding to the second reactive power control signal Q2D.

The power control unit 250 may generate a turn-on/off signal Fp2 based on the second reactive power control signal Q2D and transfer the generated signal to the receiving side DC-AC converter part 150. The receiving side DC-AC converter part 150 may receive the turn-on/off signal Fp2 and adjust the reactive power output from the receiving side DC-AC converter part 150.

According to various embodiments, it is possible to actively cope with abnormality occurring in an AC part when a feedback control of reactive power of a HVDC transmission system is performed through reactive power control unit 240.

In aforementioned embodiments, description was given of only a connection between two terminals, but the present invention is not limited thereto. Thus, the connection may also be applied to one or more of power transmission parts and power receiving parts of a multi-terminal system, and also applied to a back-to-back system.

Also, according to exemplary embodiments, the aforementioned method may be embodied as computer-readable codes on a computer-readable recording medium. Examples of the computer readable recording medium include read-only memory (ROM), random-access memory (RAM), CD-ROMs, magnetic tapes, floppy disks, optical data storage devices, and also include another medium implemented in the form of carrier waves (e.g., transmission through the Internet).

**Claims**

1. A high voltage direct current (HVDC) transmission system, comprising:

   a power transmission part (10) configured to convert converting alternating current (AC) power into direct current (DC) power;
   a power receiving part (20) configured to convert converting DC power into AC power; and
   a DC power transmission part (140) configured to transfer the DC power converted in the power transmission part to the power receiving part,
   wherein one of the power transmission part (10) and the power receiving part (20) includes:

      a measuring part which is configured to measure_an AC voltage;
      an AC voltage control unit (230) configured to generate a first reactive power control signal based on the measured AC voltage and a reference AC voltage, wherein the AC voltage control unit generates a first difference value between the measured AC voltage and the reference AC voltage as the first reactive power control signal;
      a reactive power control unit (240) configured to generate a second reactive power control signal based on the first reactive power control signal and a reference reactive power signal; and
      a power control unit (250) configured to control reactive power of the power transmission part or the power receiving part based on the second reactive power control signal,

   **characterized in that** the reactive power control unit (240) is further configured to generate a second difference value between a preset reactive power of the reference reactive power signal and a reactive power of the first reactive power control signal as the second reactive power control signal,
the power control unit (250) is further configured to generate a turn-on/off control signal based on the second reactive power control signal and transfer the generated turn-on/off control signal to a converter part to control the reactive power of the power transmission part or the power receiving part.

2. The HVDC transmission system according to claim 1, wherein the second reactive power control signal is a signal for adjusting the reactive power corresponding to the first reactive power control signal, to the preset reactive power corresponding to the reference reactive power signal.

**Patentansprüche**

1. Hochspannungsgleichstrom-(HVDC)-Übertragungssystem, umfassend:

   ein Leistungsübertragungsteil (10), das eingerichtet ist, um konvertierende Wechselstrom-(AC)-Leistung in Gleichstrom-(DC)-Leistung umzuwandeln;
   ein leistungsempfangendes Teil (20), das eingerichtet ist, um konvertierende DC-Leistung in AC-Leistung umzuwandeln; und
   ein DC-Leistungsübertragungsteil (140), das eingerichtet ist, um die DC-Leistung, die in dem Leistungsübertragungsteil umgewandelt wird, an das leistungsempfangende Detail zu übertragen,
   wobei das Leistungsübertragungsteil (10) oder das leistungsempfangende Teil (20) beinhaltet:
   ein Messteil, das eingerichtet ist, um eine AC-Spannung zu messen;
   eine AC-Spannungssteuereinheit (230), die eingerichtet ist, um ein erstes reaktives Leistungssteuersignal zu generieren, basierend auf der gemessenen AC-Spannung und einer AC-Referenz-Spannung, wobei die AC-Spannungssteuereinheit einen ersten Differenzwert zwischen der gemessenen AC-Spannung und der AC-Referenz-Spannung als das erste reaktive Leistungssteuersignal erzeugt;
   eine reaktive Leistungssteuereinheit (240), die eingerichtet ist, um ein zweites reaktives Leistungssteuersignal zu erzeugen, basierend auf dem ersten reaktiven Leistungssteuersignal und einem reaktiven Referenz-Leistungssignal; und

eine Leistungssteuereinheit (250), die eingerichtet ist, um eine reaktive Leistung des Leistungsübertragungsteils oder des Leistungsempfangsteils zu steuern, basierend auf dem zweiten reaktiven Leistungssteuersignal, **dadurch gekennzeichnet, dass** die reaktive Leistungssteuereinheit (240) ferner eingerichtet ist, um einen zweiten Differenzwert zwischen einer voreingestellten reaktiven Leistung des reaktiven Referenz-Leistungssignals und einer reaktiven Leistung des ersten reaktiven Leistungssteuersignals als das zweite reaktive Leistungssteuersignal zu erzeugen, die Leistungssteuereinheit (250) ferner eingerichtet ist, um ein Anschalt-/Abschalt-Steuersignal zu erzeugen, basierend auf dem zweiten reaktiven Leistungssteuersignal, und um das erzeugte Anschalt-/Abschalt-Steuersignal zu einem Wandlerteil zu übertragen, um die reaktive Leistung des Leistungsübertragungsteils oder des Leistungsempfangsteils zu steuern.

2. HVDC-Übertragungssystem gemäß Anspruch 1, wobei das zweite reaktive Leistungssteuersignal ein Signal ist, zum Anpassen der reaktiven Leistung, die dem ersten reaktiven Leistungssteuersignal entspricht, an die voreingestellte reaktive Leistung, die dem reaktiven Referenz-Leistungssignal entspricht.

**Revendications**

1. Un système de transmission de courant continu haute tension (HVDC), comprenant :

   une partie de transmission de puissance (10) configurée pour convertir une puissance en courant alternatif (AC) en une puissance en courant continu (DC) ;
   une partie de réception de puissance (20) configurée pour convertir la puissance DC en une puissance AC ; et
   une partie de transmission de puissance DC (140) configurée pour transférer vers la partie de réception de puissance la puissance DC convertie dans la partie de transmission de puissance,
   dans lequel l'une d'entre la partie de transmission de puissance (10) et la partie de réception de puissance (20) comprend :

      une partie de mesure qui est configurée pour mesurer une tension AC ;
      une unité de contrôle de tension AC (230) configurée pour générer un premier signal de contrôle de puissance réactive sur la base de la tension AC mesurée et d'une tension AC de référence, l'unité de contrôle de tension AC générant une première valeur de différence entre la tension AC mesurée et la tension AC de référence en tant que premier signal de contrôle de puissance réactive ;
une unité de contrôle de puissance réactive (240) configurée pour générer un second signal de contrôle de puissance réactive sur la base du premier signal de contrôle de puissance réactive et d'un signal de puissance réactive de référence ; et
une unité de contrôle de puissance (250) configurée pour contrôler la puissance réactive de la partie de transmission de puissance ou de la partie de réception de puissance sur la base du second signal de contrôle de puissance réactive,
**caractérisé en ce que** l'unité de contrôle de puissance réactive (240) est en outre configurée pour générer une seconde valeur de différence entre une puissance réactive préréglée du signal de puissance réactive de référence et une puissance réactive du premier signal de contrôle de puissance réactive en tant que second signal de contrôle de puissance réactive,
l'unité de contrôle de puissance (250) est en outre configurée pour générer un signal de contrôle marche/arrêt sur la base du second signal de contrôle de puissance réactive et transférer le signal de contrôle marche/arrêt généré vers une partie de convertisseur pour contrôler la puissance réactive de la partie de transmission de puissance ou de la partie de réception de puissance.

2. Le système de transmission HVDC selon la revendication 1, dans lequel le second signal de contrôle de puissance réactive est un signal pour l'ajustement de la puissance réactive correspondant au premier signal de contrôle de puissance réactive à la puissance réactive préréglée correspondant au signal de puissance réactive de référence.

## FIG.1

FIG.1 — Block diagram showing: 101 POWER GENERATING PART, 110 AC PART (111, 113), 103 DC POWER TRANSFORMATION PART (120 TRANSFORMER PART, 130 CONVERTER PART), 140 DC POWER TRANSMISSION PART, 105 DC POWER TRANSFORMATION PART (150 CONVERTER PART, 160 TRANSFORMER PART), 170 AC PART (171, 173), 180 POWER RECEIVING PART, 191 FIRST CONTROL PART, 193 SECOND CONTROL PART, 190.

# FIG.2

# FIG.3

# FIG.4

# FIG.5

# FIG.6

# FIG.7

# FIG.8

| MEASURE AC VOLTAGE PROVIDED TO A POWER RECEIVING PART |
|---|

S101

| GENERATE FIRST REACTIVE POWER CONTROL SIGNAL BASED ON MEASURED AC VOLTAGE AND REFERENCE AC VOLTAGE |
|---|

S103

| GENERATE SECOND REACTIVE POWER CONTROL SIGNAL BASED ON FIRST REACTIVE POWER CONTROL SIGNAL AND REFERENCE REACTIVE POWER SIGNAL |
|---|

S105

| CONTROL REACTIVE POWER BASED ON SECOND REACTIVE POWER CONTROL SIGNAL |
|---|

S107

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0554804 A1